# EUROPEAN PATENT SPECIFICATION

(11) **EP 4 381 281 B1**
(45) Date of publication and mention of the grant of the patent: **26.08.2026**
(21) Application number: 22748469.8
(22) Date of filing: 18.07.2022
(51) Int. Cl.: G01N 21/87

(54) **METHOD AND DEVICE FOR IDENTIFYING A GEMSTONE**
VERFAHREN UND VORRICHTUNG ZUR IDENTIFIKATION EINES EDELSTEINS
PROCÉDÉ ET DISPOSTIF POUR L'IDENTIFICATION D'UNE PIERRE PRÉCIEUSE

(30) Priority: 05.08.2021 IT 202100021218
(43) Date of publication of application: 12.06.2024
(73) Proprietor: DIAMSAFE SRL, 00186 Roma (IT)
(72) Inventor: CARAMELLI, Antonio, 00186 Roma (IT); FALCIONI, Andrea, 00186 Roma (IT); GIANCARLINI, Edoardo, 00186 Roma (IT)
(74) Representative: Perronace, Andrea
(86) International application number: PCT/IB2022/056589
(87) International publication number: WO 2023/012554

(56) References cited:
- EP-A1- 0 403 621
- EP-A1- 3 577 637
- CN-B- 107 727 657
- GB-A- 2 010 474
- GB-A- 2 358 541
- US-A- 3 867 032

## Description

The present invention relates to a method and device for uniquely identifying a faceted gemstone by acquiring an amount of data suited for the purpose, in particular for a successive recognition of the faceted gemstone among a set of already uniquely identified stones.

More specifically, the invention relates to the structure of a device of the type called capable of uniquely identifying a faceted gemstone, such as a diamond, by means of a method for acquiring and analyzing images related to one or more sections of said faceted gemstone.

### Prior art

Systems and methods have been developed in the gemological field to measure the characteristics of a diamond and thus give it an identity. One of the most prominent characteristics is weight, measured with precision scales. The cut is another characteristic that is measured.

A first known type system is based on an analysis of the diamond to derive values relating to the proportions of the diamond itself, which are expressed in percentage terms relative to the proportions of a diamond considered ideal. Based on these values, said first system of known type provides results as judgments regarding the cut and symmetry of the diamond, according to one or more international standards. There are different categories with which said first known type system can be associated based on the carat of the diamond. A plurality of images of the diamond to be examined, behind which a light-colored background is arranged, are acquired by means of a camera, and from the processing of said images, only information inherent to the shape of the diamond (angles and dimensions) is extracted as a function of the rotation of the supporting element on which the diamond is arranged.

However, a disadvantage of said known systems is that they do not allow for unambiguous identification or characterization of a diamond, because the parameters obtained from the comparison are very close for different diamonds and because the error in determining these parameters is high.

However, systems and methods have been developed to uniquely identify or characterize a diamond. A second known type system for uniquely identifying or characterizing a diamond is based on the presence of an engraving on the girdle of the diamond made by a laser beam. Said engraving may be performed by a gemological institute once the diamond has been certified. A first disadvantage of said second known type system is that the engraving on the diamond alters the diamond itself. A second disadvantage is that the height of the crown is small and consequently engraving said crown is a complicated matter. A third disadvantage is that making such an engraving comes at a cost. A further disadvantage is that when a diamond is stolen, it is possible to eliminate the laser engraving by abrasion and make the diamond unidentifiable or unrecognizable. A yet further disadvantage is that when a diamond provided with an engraving is set in a ring or bracelet, reading the engraving can be complicated. Furthermore, when a diamond is not engraved and is set (or fixed) in a ring or bracelet, it is not possible to make the engraving on the diamond girdle without first extracting it from said ring or bracelet.

Patent document GB 2358541 A describes a gemstone identification method based on the acquired images of such gemstones, which, however, has disadvantages related to the unique positioning of the gemstone for acquiring the images and related to the lack of discernment of which image is adapted to said unique recognition, making its application effectively useless. Indeed, it is known that not all images that can be acquired from a gemstone can provide a sufficient degree of identification of the stone itself, making the intervention of the gemologist still necessary. However, even if a suitable image were selected by pure chance, it would still not be possible to reproduce said image because of the unreliable positioning (not repeatable with sufficient accuracy) of the gemstone relative to a camera, and thus a unique recognition relative to a gemstone database would be ineffective.
Patent document GB 2010474 A describes a device in which a gemstone can be placed in a given position; however, the system is not easily adaptable to the various shapes and sizes of the gemstone, and changing the gemstone is not an easy task.

### Object and subject-matter of the invention

It is an object of the present invention to overcome said disadvantages by providing a system for uniquely identifying or characterizing a faceted gemstone, in particular a diamond, which has a simple structure and a low implementation cost.

It is a subject matter of the present invention a device for uniquely identifying or characterizing a faceted gemstone, in particular a diamond, according to the appended claims.

### Detailed description of exemplary embodiments of the invention

### List of figures

The invention will now be described by way of example, with particular reference to the drawings of the accompanying figures, in which:
- figure 1 shows a first embodiment of the gemstone identification or characterization device according to the invention;
- figure 2 shows a constituent detail of the supporting means of the gemstone, which can be used in the device in figure 1, according to an embodiment of the invention;
- figure 3 shows two views of an embodiment of the supporting means in figure 2;
- figure 4 shows a portable embodiment of the device in figure 1 with the supporting means in figures 2 and 3;
- figure 5 shows an example of the components which form the supporting means in figures 2 and 3;
- figure 6 shows a second embodiment of the supporting means to be used in a device like the one in figure 1;
- figure 7 shows an example of significant dimensions of a gemstone, to be focused by the device according to the invention;
- figure 8 shows a first example of a result achievable by rotating a first gemstone with the device according to the invention;
- figure 9 shows a second example of a result achievable by partially rotating a second gemstone using the device according to the invention; and
- figure 10 shows a third example of a result achievable by rotating the gemstone in figure 9 by 360° with the device according to the invention.

It is worth noting that hereinafter elements of different embodiments may be combined together to provide further embodiments without restrictions respecting the technical concept of the invention, as a person skilled in the art will effortlessly understand from the description.

The present description also refers to the prior art for its implementation, with regard to the detail characteristics which not described, such as, for example, elements of minor importance usually used in the prior art in solutions of the same type.

When an element is introduced, it is always understood that there may be "at least one" or "one or more".

When a list of elements or characteristics is given in this description it is understood that the invention according to the invention "comprises" or alternatively "consists of" such elements.

Two or more of the parts (elements, devices, systems) described below can be freely associated and considered as part kits according to the invention.

### Embodiments

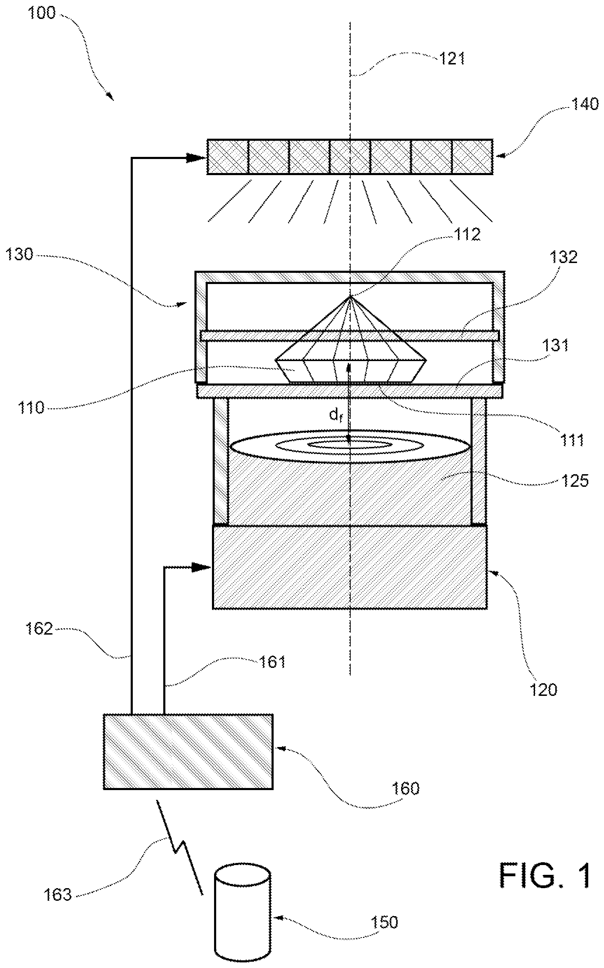

With reference to Fig. 1, the invention relates to a system 100 for uniquely identifying or characterizing a faceted gemstone 110, in particular a diamond or other appropriately cut gemstone, wherein said system comprises:
- image acquisition means 120 to acquire one or more images related to said faceted gemstone, wherein said image acquisition means have an optical axis 121,
- supporting means 130 for supporting said faceted gemstone 110 or an element provided with said faceted gemstone,
- at least one illumination device 140 for illuminating said faceted gemstone, configured to emit at least one uniform light radiation (e.g., emitted along a plurality of illumination directions), and said illumination device comprises at least one light source,
- optionally, a database 150, in which the unique identification codes of one or more predetermined faceted gemstones and/or at least one image related to said predetermined faceted gemstones are stored,
- a "control" or "recognition" unit 160 for identifying, characterizing, and optionally recognizing the faceted gemstone from said at least one image of said faceted gemstone 110, wherein said recognition unit may be connected to said image acquisition means in 161 and to said illumination device in 162, as well as to said database in 163.

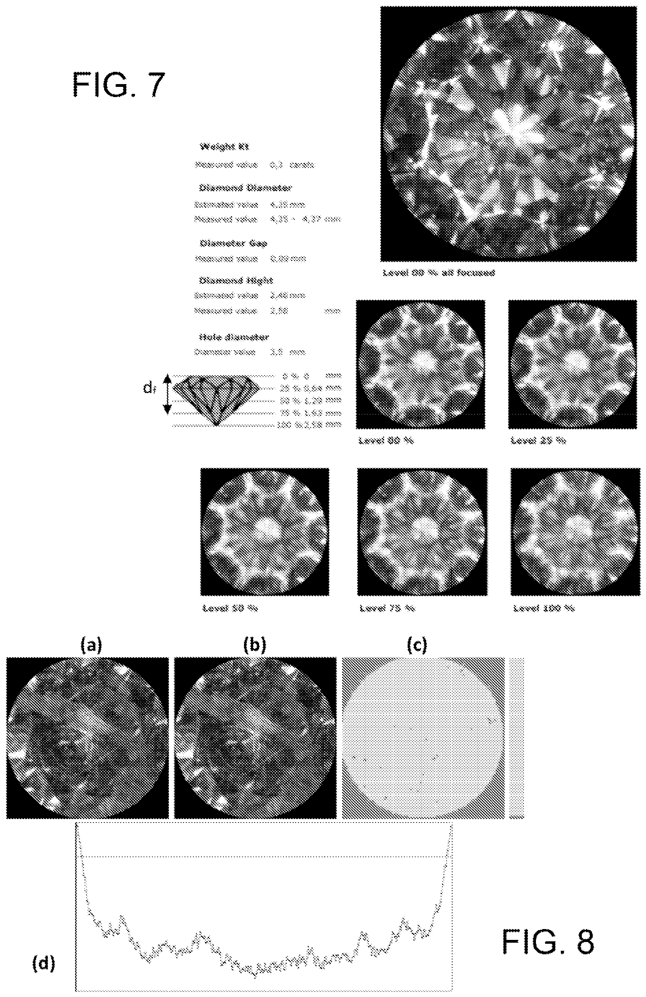

Said image acquisition means 120 may be of the type with fixed lens and aperture and fixed position and thus capable of acquiring a single image of said faceted gemstone, or may have a lens provided with variable focus and variable aperture, allowing the acquisition of images of said faceted gemstone, in which portions of said faceted gemstone positioned at a predetermined depth within said faceted gemstone may appear sharper (in focus), as a function of the diameter of the lenses and the apertures used. In this sense, Fig. 7 shows 5 depth dimensions (focus distances), which may be significant according to the invention, without this being a limitation; corresponding acquired images of a diamond are also provided.

As an alternative to the variable focus lens, to acquire more images related to said faceted gemstone, with greater sharpness of particular sections of said faceted gemstone, a servomechanism capable of micrometrically modifying the distance between said image acquisition means and said faceted gemstone can be used.

The expression "image of a section of said faceted gemstone" means in this description an image relating to an inner zone of said faceted gemstone in which the sharpness of part of the image relates to a predetermined inner zone of said faceted gemstone while the remaining blurred portions relate to portions of upper or lower sections of said faceted gemstone, along the direction which goes from the table 111 (perpendicular thereto) to the apex 112.

Said light source 140 is a uniform or substantially uniform light source arranged along the optical axis 121 of said acquisition means. The purpose of light uniformity is to prevent flaws in the arrangement of parts or obstacles, such as settings, from generating different images of the same stone.

The supporting means 130 for supporting said faceted gemstone or an element provided with said faceted gemstone are positioned between said light source 140 and said acquisition means 120 so that the optical axis of said acquisition means 120 is equal to or substantially equal to the perpendicular to the major upper section 111 of the gemstone 110, which is normally octagonal in shape and termed table in the case of a brilliant-type cut of the gemstone under examination.

Said unit 160 is configured to:
- identify or characterize a faceted gemstone based on said one or more acquired images, according to the steps of the method described below; and/or
- comparing said at least one image of said at least one section (perpendicular to the optical axis, see above) of said faceted gemstone 110 acquired by said image acquisition means 120 and corresponding images of a set of predetermined faceted gemstones for which the identification or characterization has already been performed, to measure the degree of similarity between said at least one acquired image and said predetermined faceted gemstones and possibly recognize the gemstone under examination among those already recorded.

The unit 160 may also be configured to perform a further stage of recognizing the faceted gemstone, wherein the faceted gemstone digital certificate is compared to the digital certificates of one or more previously uniquely identified faceted gemstones.

Said supporting means 130 for supporting said faceted gemstone comprises according to the claimed invention a transparent base 131 on which said faceted gemstone is positioned, in contact with the major facet 111, called table, and a screen/diaphragm 132, which limits the arrival of the light radiation emitted by the source to a portion of the gemstone under examination. The diaphragm 132 is positioned at a given height between the table and the apex of the gemstone or among other references in cases of other types of cut. The diaphragm can be made of rigid material, inserted from the apex side in the case of the supporting means 130, or made of elastic material, inserted from the table side in the case of the ring-type setting (or fixing) support, to fix it about the part of the setting which encloses the gemstone, which in all rings with one diamond (called "solitaire rings" because of the presence of a central diamond and traditionally given as a gift to seal an engagement), has a hole near the apex of the stone and through which light can pass in the direction of the diamond.

Said transparent base 131 lies on a plane perpendicular to the optical axis 121 of the image acquisition means. Said screen/diaphragm 132 limits the arrival of the light radiation emitted by the source 140 to a portion of the gemstone 110 under examination, preventing the light from reaching the image acquisition means 120 (e.g., comprising a camera 125 from the apex or table side) directly.

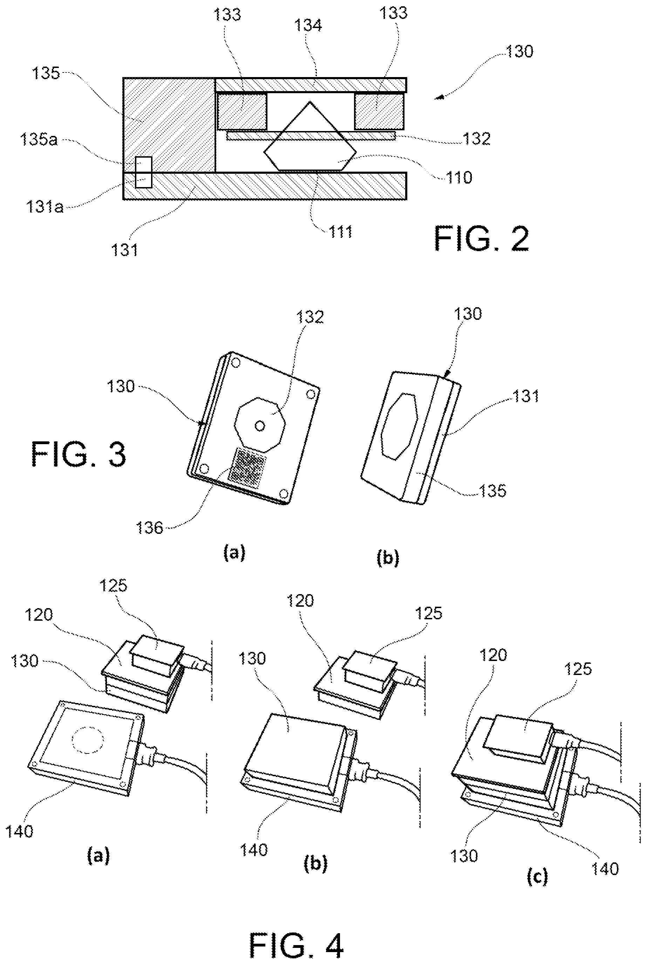

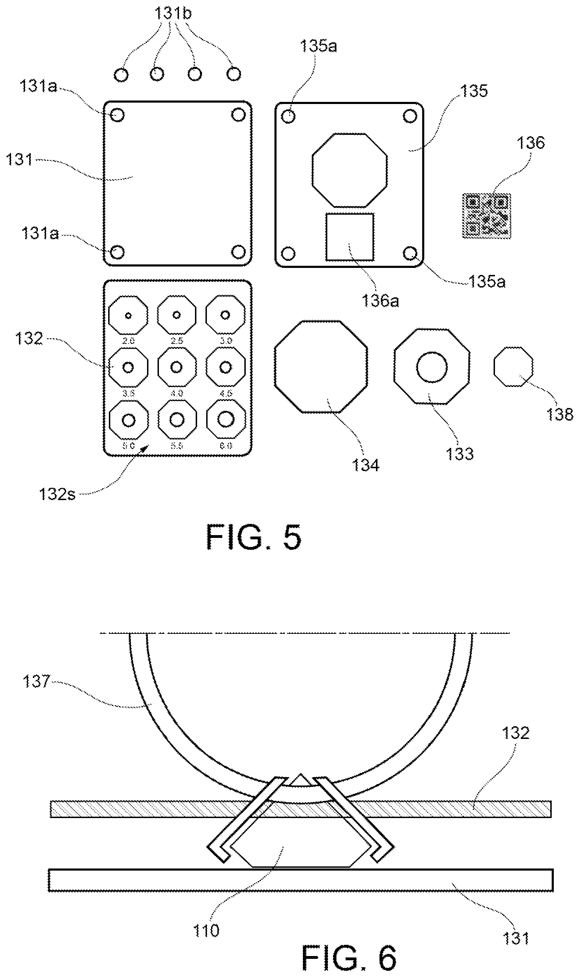

In an embodiment of said system, said supporting means 130 for supporting said faceted gemstone may be assembled together (modular means) as a whole and comprises according to the claimed invention, with reference to Figs. 2, 3 and 5:
- a transparent base 131 provided with housings 131a for magnets 131b, on which said faceted gemstone 110 is positioned, in contact with the major facet 111, named table, where said transparent base is positionable on a plane perpendicular to the optical axis 121 of the image capturing means 120;
- a screen/diaphragm 132 made of rigid plastic material (in Fig. 5 multiple openings are shown in a set 132S with different sized holes), provided with a hole with a diameter smaller than the minimum diameter of the gemstone under examination (diameter inscribed inside at a given height from the apex, the fact that the hole is smaller ensures that the light only passes through the diamond and does not directly reach the acquisition means), positioned between the diamond and the light source and attached externally to the gemstone at a given height from the apex;
- an elastic material 133, e.g., neoprene, capable of being compressed and applying a force to hold firmly the screen/diaphragm 132 position in contact with the gemstone and the gemstone itself; the elastic material comprises a central hole of fixed predetermined diameter, which can be positioned substantially coaxial to the hole of said perforated diaphragm 132, between the perforated diaphragm 132 and the diffuser layer 134;
- a light-diffusing material or layer 134, e.g., opalescent-type Plexiglas, inserted between the light source and the elastic material 133 preferably integral with
- a container 135 provided with magnets 135a (e.g., in a position corresponding to the magnets 131b in the seats 131a) in which all the described components can be housed and the transparent base can be blocked by means of the magnets.

According to the claimed invention, the distance between said light-diffusing layer 134 and said flat transparent base 131 is configured so that, when said flat transparent base 131 is fixed in use to said container, said faceted gemstone 110 is blocked with said planar face 111 against said flat transparent base 131. This has the advantage of a safe (fixed from time to time) and repeatable positioning unless a rotation occurs.

According to an example outside the claimed invention, the layer of elastic material 133 has a depression in which the perforated diaphragm 132 is inserted, for better stability of the whole.

Preferably, according to the invention, the thickness at rest of the layer of elastic material 133 is greater than its housing to apply pressure on the diaphragm and consequently force the diamond to assume a position in which the table adheres to the inner side of the transparent cover so that it always assumes a fixed position unless a rotation 132 occurs.

Preferably according to the invention, the transparent flat base 131 is provided with removable fixing means to said container for a quick replacement or an inspection of the gemstone.

In particular, preferably, said removable fixing means 131a,131b comprise one or more magnets which are adapted to be coupled to corresponding magnets 135a integrated into the container 135 for simple and effective removal and repositioning.

Optionally, a barcode (QR code) 136 may be placed in a corresponding seat 136a. The barcode may identify the database element in which the metadata of the diamond are present, and thus can allow quick access to said metadata which will then be associated with the acquired images. This contributes to identifying and verifying the identity of the gemstone.

Reference numeral 138 refers to a cap of the size of the diaphragm, which is positioned when the diaphragm and supporting means are not in use.

In this embodiment of said system, said supporting means 130 also allow a gemstone to be analyzed multiple times leaving it inside said supporting means, facilitating the use of the system.

Fig. 4 shows a portable version of the system in Fig. 1. This time a light source 140 is placed at the bottom in fig. (a), independently powered. The supporting means 130 comprising the gemstone 110 and the diaphragm 132 are placed on the light source in (b). It is worth noting that the light is not diffused and only passes through the hole left free by the diaphragm. The detection means 120, provided with the camera 125 are placed on the supporting means 130 in (c). The detection means can be independently powered and connected to an external processing unit, such as a smartphone, comprising the above database or capable of connecting to a database over the Internet.

Now with reference to Fig. 6, in a second embodiment of said system there is an element 137 provided with said faceted gemstone, e.g., a metal ring, a base on which said element provided with said faceted gemstone is positioned, wherein said base lies on a foreground perpendicular to the optical axis of the image acquisition means, and a screen/diaphragm 132, e.g., made by means of a thin elastic plate, e.g., a sheet of rubber latex or neoprene, provided with a small hole.

Before placing the ring 137 in which the gemstone is set (fixed), the screen/diaphragm must be placed at the height of the part of the setting which has the hole exactly along the optical axis, so that it adheres about the part of the setting which has the hole and allows the light generated by the light source to reach only the lower central portion of the gemstone, about the apex.

Referring again also to Fig. 1, said recognition unit can be connected to said acquisition means 120 (to change the conditions of taking the images, varying the focus and aperture) in 161, to said illumination means 140 in 162 and to said database 150 in 163 or, in a second embodiment, it may have a recognition unit sub-part connected to said acquisition means and said illumination means capable of connecting to a smartphone, e.g., by means of Bluetooth radio communication and through the smartphone, access the database 150.

The present invention further relates to a device configured to perform the following method for uniquely identifying a gemstone, comprising the performance of the following steps:
A. providing a faceted gemstone 110 comprising an apex 112 and a planar face (111) at the end opposite to said apex, the faceted gemstone 110 being either free or fixed to a setting 137;
B. inserting said faceted gemstone (110) into a perforated diaphragm 132 until said perforated diaphragm 132 is blocked about said faceted gemstone or about a portion of said setting;
C. illuminating the faceted gemstone 110 from the side of said apex 112 through substantially uniform illumination;
D. acquiring one or more images of said gemstone, through a camera (125), having an optical axis substantially perpendicular to said planar face (111), at one or more corresponding predetermined focus distances d_{f} from said camera;
E. performing the following sub-steps:
   E1. determining the center of at least one of said one or more images of step D;
   E2. digitally rotating a first image of said one or more images relative to said center, for one or more steps of rotation, each one equal to a predetermined rotation step, obtaining a first rotated image each time;
   E3. during step E2, for each rotation step, comparing the first rotated image with the first image acquired in step D, obtaining a respective value of at least one parameter representative of the similarity between the image acquired in step D and the rotated image;
F. generating a faceted gemstone digital certificate identification based on said first image, on the focus distance, and optionally on the values of said at least one parameter representative of the similarity obtained in step E3.

The basic concept of comparing an image of the next gemstone with its versions rotated by steps and calculating a parameter representative of the similarity (or "self-similarity") each time can be declined in many variations. The important thing is that the rotated image defines the uniqueness of the gemstone, because the similarity parameter either has an unambiguous trend or is quite low, which means that the stone is sufficiently far from perfection, and thus is uniquely characterized.

If the similarity parameter is sufficiently low, said predetermined rotation step is a step for which there is rotational symmetry of said gemstone, and the following stages are performed after stage E3:
E4. if said respective value of stage E3 is lower than a predetermined threshold for one of the one or more rotation steps, go to stage F,
E5. if said similarity parameter in stage E3 is equal to or higher than said predetermined threshold, alternatively:
   - perform stages E2-E4 for a second image of said one or more images, and so on until said respective value is lower than said predetermined threshold;
   - performing step D again by acquiring additional one or more images of said gemstone at one or more corresponding further predetermined focus distances (d_{f}) other than said one or more corresponding predetermined focus distances (d_{f}), and performing steps E1-E5 again for said additional one or more images;
   - performing a step E6 in which one or more flaws are identified in one of said one or more images and go to step F;
and wherein in step F the digital faceted gemstone identification certificate is generated based on:
- the image of said one or more images or said one or more further images for which the respective value in step E4 or E5 is lower than said predetermined threshold, the respective focus distance, and optionally based on said respective value;
- if step E6 is performed, based on the one or more flaws of step E6.

The digital faceted gemstone identification certificate can be generated based on both said image of step F, the respective focus distance, and the one or more flaws of step E6.

This variant of the fundamental concept is advantageous because the method stops at the first situation useful to determine sufficient uniqueness of an image of the stone (and thus of the stone itself).

If, on the other hand, it is not desired to apply the further threshold concept for the similarity parameter, the predetermined rotation step can be set as arbitrary (e.g., 1° or otherwise sufficiently small to sample the trend of the parameter for the unique characterization of the trend, e.g., 0.1-5°, preferably, 0.5-2°) and perform the entire rotation over 360° starting from a plurality of initial positions of the stone, e.g., the rotational symmetry positions of the stone (to the benefit of reproducibility in this case). This makes it possible to extract a sequence of parameter values, which is reproducible by another user analyzing the stone in the same manner (because it is sufficiently independent from the starting point of the rotation, the number of starting points to be made being determinable on a case by case basis for a specific type of stone with a few tests). This sequence of values, together with the image being rotated and the focus distance, is used in stage E to generate the certificate, e.g., including focus information, which identifies the shooting conditions of the image used and a hash of the trend of the calculated similarity values. It is further apparent that the inclusion of flaws visible to the eye or recognized by an expert algorithm (step F6) compensates for those cases in which the other steps failed to determine the sufficient uniqueness of the stone.

This second exemplary variant is more laborious but has the advantage of being independent of the particular values of the similarity parameter, all of which may also be above the threshold of the first variant. In such a case, there would be a near-perfect stone but with a sufficiently small rotational pitch, very small imperfections could be identified and still get an impression of the uniqueness of the gemstone.

In this description, the generation of a certificate based on one or more images, however chosen according to the options, means that the certificate comprises the acquired image subjected to auto-rotation, its focus distance, as well as any other information extracted from the image, as above. All these elements are digital and can be transformed, e.g., by a hash function, and combined with other information about the image used and possibly, in general, about the stone, e.g., related to the flaws of steps E6.

According to a different embodiment, said similarity parameter is obtained based on similarity parameter values for a predetermined rotation step (or "instantaneous value") of each image in step F2, as shown below. This allows better identification of specific gemstone recognition characteristics.

Advantageously according to the invention, said instantaneous similarity parameter can be proportional to the number of identical pixels within a certain tolerance of the initial image with the image during the rotation of step F2, which is a convenient embodiment because it is digital and without an expert algorithm, as shown below.

Advantageously according to the invention, to achieve higher stone identification accuracy, in step E the digital faceted gemstone identification certificate is generated based on said one image and the one or more flaws of step F5.

Advantageously according to the invention, specific information related to the initial position of the stone in a sealed container can be associated to achieve greater stone identification accuracy. This specific information will be lost and will be unusable once the container is opened and the diamond is removed and put back into the container, losing its initial rotational position.

According to a preferred embodiment, a further step G of recognizing the faceted gemstone may be performed, wherein the faceted gemstone digital certificate is compared to the digital certificates of one or more of the previously uniquely identified faceted gemstones. Each digital certificate may contain the corresponding images at different focus distances mentioned above, or information extracted from at least one of them.

Obviously, this is possible when a database of images of uniquely identified or characterized diamonds is available. The present invention allows this unique identification or characterization, as shown below.

The system 100 with its components described above can be used with the method described here. For example, the unit 160 may be configured for:
- if at step F4 the similarity parameter is below said predetermined threshold for an image of said one or more images or said one or more further images, based on said one image;
- if stage F5 is performed, based on the one or more flaws of step F5.

Turning to the aforesaid rotations, Figure 8 shows a faceted gemstone in a first position about its central axis (not shown) in (a), the same gemstone rotated almost 360° (a few hundredths of a degree from 360° to show that perfect superimposition of the initial image with the perfectly rotated one is being achieved) in (b) and the (dark) pixel map where the overlap generates a significant deviation of tone value in (c). The trend of a similarity parameter **(e.g.,** based on the difference of color tones, number of pixels with the same tone within a certain predefined tolerance) of the stone with itself as the rotation changes is shown in (d). It is apparent that an imperfect stone will exceed the similarity threshold only for rotations close to the revolution. Imperfections in the superimposition even in case of stones with a high degree of perfection may be due to inaccuracy in identifying or locating the center of the stone.

Practically, what is sought for the identification or characterization described here is precisely that the similarity parameter is below the predetermined threshold, because its imperfection is a unique characteristic in this case.

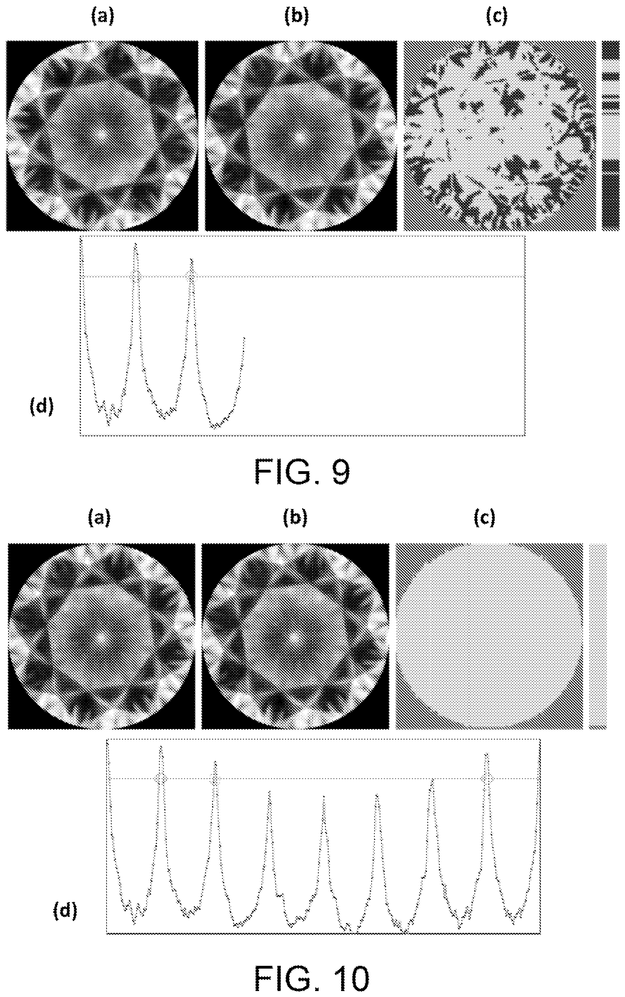

Figure 9 shows a faceted gemstone of high quality and symmetry in a first position around its central axis (not shown) in (a), the same gemstone rotated by almost 3/8 revolution in (b) and the pixel map (dark) where the superimposition generates a significant deviation of tone value in (c). The trend of a similarity parameter (e.g., based on the difference of color tones) of the stone with itself as the rotation changes is shown in (d). It is apparent that a high-quality stone will exceed the similarity threshold at every multiple of 1/8 revolution (for octagonal cuts, of course, any other type of cut being possible). There may also be imperfections in the superimposition here due to inaccuracy in identifying or locating the center of the stone. Such imperfections can be neglected by defining a specific tolerance threshold.

Fig. 10 is the same situation as in 9, in which, however, almost the entire revolution minus a few hundredths of a degree has been accomplished. No major deviations are eventually observed in (c), while in (d) it is observed that for angles of 3-4-5/8 the similarity parameter is under threshold, a sign that the stone is not perfect and thus better identifiable or characterizable. The integer trend in figure (d) can itself be taken as the unique "footprint" of the stone, **i.e.,** its irregularity can be the similarity parameter, possibly transformed with a hash function alone or together with other information.

If this parameter is not low enough, the image acquisition focus in the device can be changed according to the invention and a second identification or characterization can be performed, and so on until a sub-threshold value is found. One can also stop at any iteration of this procedure by including in the similarity parameter information about specific flaws recognized by the eye or by an expert algorithm in one of the images. It is apparent that the term similarity parameter also encompasses a plurality of information related to similarity.

For obtaining the similarity parameter, it is possible to mathematically combine (e.g., sum, difference, correlation) the trends as in figures 8 to 10 for each image of several acquired images of the same stone to obtain a unique value to compare with the predefined similarity threshold. The unique value can then be entered into a digital certificate for identification or characterization, optionally as a hash. The digital certificate of identification or characterization can be put on a blockchain.

### Advantages of the invention

The solution according to the invention has many benefits, including:
- the unique identification or characterization of a gemstone, either as a unique characterization of the bare stone or as a unique characterization of a stone on a support (such as a ring);
- the recognition of a gemstone among a set of previously characterized gemstones;
- a simple, inexpensive, and reusable gemstone identification or characterization device; and
- a simple and reusable faceted gemstone supporting device, and serving in identification or characterization according to the invention.

Hereto, we have described the preferred embodiments and suggested some variants of the present invention, but it is understood that a person skilled in the art can make modifications and changes without departing from the corresponding scope of protection, as defined by the appended claims.

## Claims

1. A modular device (130) for supporting a faceted gemstone (110) comprising an apex (112) and a planar face (111) at the end opposite to said apex, comprising a container (135) and:
- a light-diffusing layer (134) which is integral to said container;
- a flat transparent base (131) fixable to said container parallel to said diffusing layer,
the following elements included in the device (100) being positionable between the diffusing layer (134) and the flat transparent base (131):
- a perforated diaphragm (132) which is fixable to said faceted gemstone by inserting said apex (112) into the hole of the diaphragm up to a given distance from said apex;
- an elastic material layer (133) having a central hole of fixed predetermined diameter, which is positionable substantially coaxial to the hole of said perforated diaphragm (132), between the perforated diaphragm (132) and the diffusing layer (134);
and wherein the distance between said light-diffusing layer (134) and said flat transparent base (131) is configured so that, when said flat transparent base (131) is fixed in use to said container, said faceted gemstone (110) is blocked with said planar face (111) against said flat transparent base (131).

2. A device (130) according to claim 1, wherein the layer of elastic material (133) has a depression in which the perforated diaphragm (132) is inserted, preferably the thickness at rest of the layer of elastic material (133) is greater than its housing to apply pressure on the diaphragm and consequently force the diamond to assume a position in which the table adheres to the inner side of the transparent cover so that it always assumes a fixed position unless it is rotated (132).

3. A device (130) according to claim 1 or 2, wherein the flat transparent base (131) is provided with removable fixing means to said container.

4. A device (130) according to claim 2, wherein said removable fixing means (131a,131b) comprise one or more magnets which are couplable to corresponding magnets (135a) integrated into the container (135).

5. A device according to one or more of claims 1 to 4, wherein said perforated diaphragm (132) has a hole of smaller diameter than the minimum diameter of the faceted gemstone as the internal diameter inscribed at a predetermined height from the apex.

6. A faceted gemstone image acquisition device (110), comprising a modular device (130) for supporting a gemstone according to one or more of claims 1 to 4 as well as a gemstone support base (131) or housing configured to accommodate said modular device (130), a substantially uniform light source (140) and a camera (125) opposite to said light source and comprising focusing means configured to acquire images at one or more predetermined focus distances (d_{f}), the support base (131) or housing being placed between said substantially uniform light source (140) and said camera (125), a control unit (160) in communication with a processing unit, said camera (125) and processing unit being configured to perform the following steps:
D. acquiring one or more images of said gemstone, through said camera (125), having an optical axis substantially perpendicular to said planar face (111), at said one or more corresponding predetermined focus distances (d_{f}) from said camera;
E. performing, by the processing unit, the following sub-steps:
E1. determining the center of at least one of said one or more images of stage D;
E2. digitally rotating a first image of said one or more images relative to said center, for one or more steps of rotation, each one equal to a predetermined rotation step, obtaining a first rotated image each time;
E3. during stage E2, for each rotation step, comparing the first rotated image with said first image acquired in step D, thus obtaining a respective value of at least one parameter representative of the similarity between the first image acquired in stage D and the first rotated image;
F. generating, by the processing unit, a faceted gemstone digital certificate identification based on said first image, the focus distance, and optionally values of said at least one parameter representative of the similarity obtained in step E3.

7. A device according to claim 6, in which said processing unit is configured to perform the following step G:
**G. recognizing the faceted gemstone is performed, in which the faceted gemstone digital certificate is compared to the digital certificates of one or more previously uniquely identified faceted gemstones.**

8. A device according to claim 6 or 7, wherein said predetermined rotation step is a step for which there is a rotational symmetry of said gemstone, and the following steps are performed after step E3:
E4. if said respective value of step E3 is lower than a predetermined threshold for one of the one or more rotation steps, go to step F,
E5. if said similarity parameter in step E3 is equal to or higher than said predetermined threshold, alternatively:
- performing steps E2-E4 for a second image of said one or more images, and so on until said respective value is lower than said predetermined threshold;
- acquiring, by said camera, further one or more images of said gemstone at one or more corresponding further predetermined focus distances (d_{f}) other than said one or more corresponding predetermined focus distances (d_{f}), and performing steps E1-E5 again for said additional one or more images;
- performing a step E6 in which one or more flaws are identified in one of said one or more images and going to step F;
and wherein in step F the digital faceted gemstone identification certificate is generated based on:
- the image of said one or more images or said one or more further images for which the respective value in step E4 or E5 is lower than said predetermined threshold, the respective focus distance, and optionally based on said respective value;
- if stage E6 is performed, based on the one or more flaws of step E6.

9. A device according to claim 8, wherein in step F the digital faceted gemstone identification certificate is also generated based on the one or more flaws in step E6.

10. A device according to any one claim 7 to 9, in which in step E2 the predetermined rotation step is arbitrary and the rotation is performed over 360° starting from a plurality of initial positions of the stone, e.g., the positions of rotational symmetry of the stone, in step E the certificate being generated based on the image chosen for the rotation, the corresponding focus distance, and based on the set of values obtained in step E3 for said parameter representative of the similarity.

11. A device according to any one claim 7 to 10, wherein the values of said similarity parameter are proportional to the number of identical pixels, within a given tolerance, in the initial image as compared to the image after one or more steps of rotation during the rotation in step E2.

## Patentansprüche

1. Modulare Vorrichtung (130) zum Tragen eines facettierten Edelsteins (110), der eine Spitze (112) und eine planare Fläche (111) an dem der Spitze gegenüberliegenden Ende umfasst, umfassend einen Behälter (135) und:
- eine lichtstreuende Schicht (134), die integraler Bestandteil des Behälters ist;
- eine flache transparente Basis (131), die parallel zu der lichtstreuenden Schicht an dem Behälter befestigbar ist,
wobei die folgenden, in der Vorrichtung (100) enthaltenen Elemente zwischen der lichtstreuenden Schicht (134) und der flachen transparenten Basis (131) positionierbar sind:
- eine perforierte Membran (132), die durch Einführen der Spitze (112) in die Öffnung der Membran bis zu einem gegebenen Abstand von der Spitze an dem facettierten Edelstein befestigbar ist;
- eine elastische Materialschicht (133) mit einer zentralen Öffnung mit fest vorgegebenem Durchmesser, die im Wesentlichen koaxial zu der Öffnung der perforierten Membran (132) zwischen der perforierten Membran (132) und der lichtstreuenden Schicht (134) positionierbar ist;
und wobei der Abstand zwischen der lichtstreuenden Schicht (134) und der flachen transparenten Basis (131) so ausgelegt ist, dass, wenn die flache transparente Basis (131) zur Verwendung an dem Behälter befestigt ist, der facettierte Edelstein (110) mit seiner planaren Fläche (111) gegen die flache transparente Basis (131) gehalten wird.

2. Vorrichtung (130) nach Anspruch 1, wobei die elastische Materialschicht (133) eine Vertiefung aufweist, in welche die perforierte Membran (132) eingesetzt ist, wobei vorzugsweise die unbelastete Dicke der elastischen Materialschicht (133) größer ist als die Tiefe ihrer Aufnahme, um Druck auf die Membran auszuüben und folglich den Diamanten zu zwingen, eine Position einzunehmen, in der die Tafel an der Innenseite der transparenten Abdeckung anliegt, so dass sie stets eine feste Position einnimmt, sofern sie nicht gedreht wird (132).

3. Vorrichtung (130) nach Anspruch 1 oder 2, wobei die flache transparente Basis (131) mit lösbaren Befestigungsmitteln zum Befestigen an dem Behälter versehen ist.

4. Vorrichtung (130) nach Anspruch 2, wobei die lösbaren Befestigungsmittel (131a, 131b) einen oder mehrere Magnete umfassen, die mit entsprechenden, in den Behälter (135) integrierten Magneten (135a) koppelbar sind.

5. Vorrichtung nach einem oder mehreren der Ansprüche 1 bis 4, wobei die perforierte Membran (132) eine Öffnung mit einem kleineren Durchmesser als dem Mindestdurchmesser des facettierten Edelsteins aufweist, wobei der Mindestdurchmesser als der in einer vorgegebenen Höhe von der Spitze einbeschriebene Innendurchmesser definiert ist.

6. Vorrichtung (110) zur Bildaufnahme eines facettierten Edelsteins, umfassend eine modulare Vorrichtung (130) zum Tragen eines Edelsteins nach einem oder mehreren der Ansprüche 1 bis 4 sowie eine Edelsteinträgerbasis (131) oder ein Gehäuse, das zur Aufnahme der modularen Vorrichtung (130) eingerichtet ist, eine im Wesentlichen gleichmäßige Lichtquelle (140) und eine der Lichtquelle gegenüberliegende Kamera (125), die Fokussierungsmittel umfasst, welche zur Aufnahme von Bildern bei einem oder mehreren vorgegebenen Fokussierabständen (d_{f}) eingerichtet sind, wobei die Trägerbasis (131) oder das Gehäuse zwischen der im Wesentlichen gleichmäßigen Lichtquelle (140) und der Kamera (125) angeordnet ist, eine Steuereinheit (160), die mit einer Verarbeitungseinheit in Kommunikation steht, wobei die Kamera (125) und die Verarbeitungseinheit eingerichtet sind, die folgenden Schritte auszuführen:
D. Aufnehmen eines oder mehrerer Bilder des Edelsteins mittels der Kamera (125), deren optische Achse im Wesentlichen senkrecht zu der planaren Fläche (111) verläuft, bei den entsprechenden einen oder mehreren vorgegebenen Fokussierabständen (d_{f}) von der Kamera;
E. Ausführen der folgenden Unterschritte durch die Verarbeitungseinheit:
E1. Bestimmen des Mittelpunkts mindestens eines der einen oder mehreren Bilder aus Schritt D;
E2. digitales Drehen eines ersten Bildes der einen oder mehreren Bilder um den Mittelpunkt in einem oder mehreren Drehschritten, wobei jeder Drehschritt gleich einem vorgegebenen Drehschritt ist, sodass jedes Mal ein erstes gedrehtes Bild erhalten wird;
E3. während des Schritts E2, für jeden Drehschritt, Vergleichen des ersten gedrehten Bildes mit dem in Schritt D aufgenommenen ersten Bild, wodurch jeweils ein Wert mindestens eines Parameters erhalten wird, der die Ähnlichkeit zwischen dem in Schritt D aufgenommenen ersten Bild und dem ersten gedrehten Bild repräsentiert;
F. Erzeugen eines digitalen Identifikationszertifikats für den facettierten Edelstein durch die Verarbeitungseinheit auf der Grundlage des ersten Bildes, des Fokussierabstands und optional der Werte des mindestens einen Parameters, der die in Schritt E3 ermittelte Ähnlichkeit repräsentiert.

7. Vorrichtung nach Anspruch 6, wobei die Verarbeitungseinheit eingerichtet ist, den folgenden Schritt G auszuführen:
G. Erkennen des facettierten Edelsteins, wobei das digitale Zertifikat des facettierten Edelsteins mit den digitalen Zertifikaten eines oder mehrerer zuvor eindeutig identifizierter facettierter Edelsteine verglichen wird.

8. Vorrichtung nach Anspruch 6 oder 7, wobei der vorgegebene Drehschritt ein Drehschritt ist, für den eine Rotationssymmetrie des Edelsteins vorliegt, und wobei nach Schritt E3 die folgenden Schritte ausgeführt werden:
E4. wenn der jeweilige Wert aus Schritt E3 für einen der einen oder mehreren Drehschritte unter einem vorgegebenen Schwellenwert liegt, Fortfahren mit Schritt F;
E5. wenn der Ähnlichkeitsparameter in Schritt E3 gleich dem vorgegebenen Schwellenwert oder größer als dieser ist, alternativ:
- Ausführen der Schritte E2-E4 für ein zweites Bild der einen oder mehreren Bilder und so weiter, bis der jeweilige Wert unter dem vorgegebenen Schwellenwert liegt;
- Aufnehmen eines oder mehrerer zusätzlicher Bilder des Edelsteins durch die Kamera bei einem oder mehreren weiteren entsprechenden vorgegebenen Fokussierabständen (d_{f}), die sich von den einen oder mehreren entsprechenden vorgegebenen Fokussierabständen (d_{f}) unterscheiden, und erneutes Ausführen der Schritte E1-E5 für die zusätzlichen Bilder;
- Ausführen eines Schritts E6, in welchem eine oder mehrere Fehlstellen in einem der einen oder mehreren Bilder identifiziert werden, und anschließendes Fortfahren mit Schritt F;
und wobei in Schritt F das digitale Identifikationszertifikat des facettierten Edelsteins erzeugt wird auf der Grundlage von:
- dem Bild der einen oder mehreren Bilder oder der einen oder mehreren zusätzlichen Bilder, für welches der jeweilige Wert in Schritt E4 oder E5 unter dem vorgegebenen Schwellenwert liegt, dem entsprechenden Fokussierabstand und optional auf der Grundlage des jeweiligen Werts;
- falls Schritt E6 ausgeführt wird, auf der Grundlage der einen oder mehreren in Schritt E6 identifizierten Fehlstellen.

9. Vorrichtung nach Anspruch 8, wobei in Schritt F das digitale Identifikationszertifikat des facettierten Edelsteins zusätzlich auf der Grundlage der einen oder mehreren in Schritt E6 identifizierten Fehlstellen erzeugt wird.

10. Vorrichtung nach einem der Ansprüche 7 bis 9, wobei in Schritt E2 der vorgegebene Drehschritt beliebig ist und die Drehung über 360° aus einer Vielzahl von Ausgangspositionen des Edelsteins, beispielsweise den Rotationssymmetriepositionen des Edelsteins, durchgeführt wird, wobei in Schritt E das Zertifikat auf der Grundlage des für die Drehung ausgewählten Bildes, des entsprechenden Fokussierabstands und auf der Grundlage der Gesamtheit der in Schritt E3 erhaltenen Werte des die Ähnlichkeit repräsentierenden Parameters erzeugt wird.

11. Vorrichtung nach einem der Ansprüche 7 bis 10, wobei die Werte des Ähnlichkeitsparameters proportional zu der Anzahl identischer Pixel innerhalb einer vorgegebenen Toleranz im Ausgangsbild im Vergleich zu dem Bild nach einem oder mehreren Drehschritten während der Drehung in Schritt E2 sind.

## Revendications

1. Dispositif modulaire (130) pour supporter une pierre précieuse à facettes (110) comprenant une pointe (112) et une face plane (111) au niveau de l'extrémité opposée à ladite pointe, comprenant un récipient (135) et :
- une couche diffusante de lumière (134) faisant partie intégrante dudit récipient ;
- une base transparente plane (131) pouvant être fixée audit récipient parallèlement à ladite couche diffusante,
les éléments suivants compris dans le dispositif (100) pouvant être positionnés entre la couche diffusante (134) et la base transparente plane (131) :
- un diaphragme perforé (132) pouvant être fixé à ladite pierre précieuse à facettes par insertion de ladite pointe (112) dans le trou du diaphragme jusqu'à une distance donnée de ladite pointe ;
- une couche de matériau élastique (133) présentant un trou central de diamètre prédéterminé fixe, pouvant être positionnée sensiblement coaxialement au trou dudit diaphragme perforé (132), entre le diaphragme perforé (132) et la couche diffusante (134) ;
et dans lequel la distance entre ladite couche diffusante de lumière (134) et ladite base transparente plane (131) est configurée de telle sorte que, lorsque ladite base transparente plane (131) est fixée en utilisation audit récipient, ladite pierre précieuse à facettes (110) est bloquée avec ladite face plane (111) contre ladite base transparente plane (131).

2. Dispositif (130) selon la revendication 1, dans lequel la couche de matériau élastique (133) présente un évidement dans lequel le diaphragme perforé (132) est inséré, de préférence l'épaisseur au repos de la couche de matériau élastique (133) étant supérieure à celle de son logement afin d'appliquer une pression sur le diaphragme et, par conséquent, de forcer le diamant à prendre une position dans laquelle la table adhère au côté interne du couvercle transparent de sorte qu'il assume toujours une position fixe à moins qu'il ne soit tourné (132).

3. Dispositif (130) selon la revendication 1 ou 2, dans lequel la base transparente plane (131) est pourvue de moyens de fixation amovibles audit récipient.

4. Dispositif (130) selon la revendication 2, dans lequel lesdits moyens de fixation amovibles (131a,131b) comprennent un ou plusieurs aimants pouvant être couplés à des aimants correspondants (135a) intégrés dans le récipient (135).

5. Dispositif selon l'une quelconque des revendications 1 à 4, dans lequel ledit diaphragme perforé (132) présente un trou de diamètre inférieur au diamètre minimal de la pierre précieuse à facettes en tant que diamètre interne inscrit à une hauteur prédéterminée à partir de la pointe.

6. Dispositif (110) d'acquisition d'images d'une pierre précieuse à facettes, comprenant un dispositif modulaire (130) pour supporter une pierre précieuse selon l'une quelconque des revendications 1 à 4 ainsi qu'une base de support de pierre précieuse (131) ou un boîtier configuré pour recevoir ledit dispositif modulaire (130), une source lumineuse sensiblement uniforme (140) et une caméra (125) opposée à ladite source lumineuse et comprenant des moyens de focalisation configurés pour acquérir des images à une ou plusieurs distances de focalisation prédéterminées (d_{f}), la base de support (131) ou le boîtier étant placé entre ladite source lumineuse sensiblement uniforme (140) et ladite caméra (125), une unité de commande (160) en communication avec une unité de traitement, ladite caméra (125) et l'unité de traitement étant configurées pour exécuter les étapes suivantes :
D. acquisition d'une ou plusieurs images de ladite pierre précieuse, au moyen de ladite caméra (125), présentant un axe optique sensiblement perpendiculaire à ladite face plane (111), au niveau desdites une ou plusieurs distances de focalisation prédéterminées correspondantes (d_{f}) par rapport à ladite caméra ;
E. exécution, par l'unité de traitement, des sous-étapes suivantes :
E1. détermination du centre d'au moins une desdites une ou plusieurs images de l'étape D ;
E2. rotation numérique d'une première image desdites une ou plusieurs images autour dudit centre, selon une ou plusieurs étapes de rotation, chacune étant égale à un pas de rotation prédéterminé, en obtenant à chaque fois une première image tournée ;
E3. pendant l'étape E2, pour chaque pas de rotation, comparaison de la première image tournée avec ladite première image acquise à l'étape D, obtenant ainsi une valeur respective d'au moins un paramètre représentatif de la similarité entre la première image acquise à l'étape D et la première image tournée ;
F. génération, par l'unité de traitement, d'un certificat numérique d'identification de pierre précieuse à facettes sur la base de ladite première image, de la distance de focalisation et, facultativement, des valeurs dudit au moins un paramètre représentatif de la similarité obtenues à l'étape E3.

7. Dispositif selon la revendication 6, dans lequel ladite unité de traitement est configurée pour exécuter l'étape suivante G :
G. la reconnaissance de la pierre précieuse à facettes est effectuée, dans laquelle le certificat numérique de la pierre précieuse à facettes est comparé aux certificats numériques d'une ou plusieurs pierres précieuses à facettes précédemment identifiées de manière unique.

8. Dispositif selon la revendication 6 ou 7, dans lequel ledit pas de rotation prédéterminé est un pas pour lequel il existe une symétrie de rotation de ladite pierre précieuse, et les étapes suivantes sont exécutées après l'étape E3 :
E4. si ladite valeur respective de l'étape E3 est inférieure à un seuil prédéterminé pour l'un desdits un ou plusieurs pas de rotation, passer à l'étape F ;
E5. si ledit paramètre de similarité à l'étape E3 est égal ou supérieur audit seuil prédéterminé, alternativement :
- exécution des étapes E2-E4 pour une deuxième image desdites une ou plusieurs images, et ainsi de suite jusqu'à ce que ladite valeur respective soit inférieure audit seuil prédéterminé ;
- acquisition, par ladite caméra, d'une ou plusieurs images supplémentaires de ladite pierre précieuse à une ou plusieurs autres distances de focalisation prédéterminées correspondantes (d_{f}) autres que lesdites une ou plusieurs distances de focalisation prédéterminées correspondantes (d_{f}), et exécution à nouveau des étapes E1-E5 pour lesdites une ou plusieurs images supplémentaires ;
- exécution d'une étape E6 dans laquelle un ou plusieurs défauts sont identifiés dans l'une desdites une ou plusieurs images, puis passage à l'étape F ;
et dans lequel, à l'étape F, le certificat numérique d'identification de la pierre précieuse à facettes est généré sur la base de :
- l'image desdites une ou plusieurs images ou desdites une ou plusieurs images supplémentaires pour laquelle la valeur respective à l'étape E4 ou E5 est inférieure audit seuil prédéterminé, de la distance de focalisation correspondante et, facultativement, sur la base de ladite valeur respective ;
- si l'étape E6 est exécutée, sur la base du ou des défauts de l'étape E6.

9. Dispositif selon la revendication 8, dans lequel, à l'étape F, le certificat numérique d'identification de la pierre précieuse à facettes est également généré sur la base du ou des défauts de l'étape E6.

10. Dispositif selon l'une quelconque des revendications 7 à 9, dans lequel, à l'étape E2, le pas de rotation prédéterminé est arbitraire et la rotation est effectuée sur 360° à partir d'une pluralité de positions initiales de la pierre, par exemple les positions de symétrie de rotation de la pierre, à l'étape E le certificat étant généré sur la base de l'image choisie pour la rotation, de la distance de focalisation correspondante et sur la base de l'ensemble des valeurs obtenues à l'étape E3 pour ledit paramètre représentatif de la similarité.

11. Dispositif selon l'une quelconque des revendications 7 à 10, dans lequel les valeurs dudit paramètre de similarité sont proportionnelles au nombre de pixels identiques, dans une tolérance donnée, dans l'image initiale par rapport à l'image après une ou plusieurs étapes de rotation pendant la rotation à l'étape E2.
